# FASCICULE DE BREVET EUROPEEN

(11) **EP 2 700 122 B1**
(45) Date de publication et mention de la délivrance du brevet: **04.04.2018**
(21) Numéro de dépôt: 12715987.9
(22) Date de dépôt: 19.04.2012
(51) Int. Cl.: C04B 35/01, C04B 35/16, C04B 35/486, C04B 35/624, C04B 35/626, C04B 35/632, C25B 11/04, H01M 4/86, H01M 4/88, H01M 4/90, H01M 8/1213, H01M 8/124

(54) **PROCÉDÉ DE PRÉPARATION D'UNE DEMI-CELLULE ÉLECTROCHIMIQUE**
VERFAHREN ZUR HERSTELLUNG EINER ELEKTROCHEMISCHEN HALBZELLE
METHOD OF PREPARING AN ELECTROCHEMICAL HALF-CELL

(30) Priorité: 22.04.2011 FR 1153522
(43) Date de publication de la demande: 26.02.2014
(73) Titulaire: Commissariat à l'Énergie Atomique et aux Énergies Alternatives, 75015 Paris (FR)
(72) Inventeur: DELAHAYE, Thibaud, F-30330 Tresques (FR); RIEU, Mathilde, F-38000 Grenoble (FR)
(74) Mandataire: Ahner, Philippe
(86) Numéro de dépôt international: PCT/EP2012/057117
(87) Numéro de publication internationale: WO 2012/143417

(56) Documents cités:
- EP-A1- 2 083 465
- WO-A2-03/036739
- US-A1- 2003 003 237
- US-A1- 2003 021 900
- ZHANG X ET AL: "NiO-YSZ cermets supported low temperature solid oxide fuel cells", JOURNAL OF POWER SOURCES, ELSEVIER SA, CH, vol. 161, no. 1, 20 octobre 2006 (2006-10-20), pages 301-307, XP025084991, ISSN: 0378-7753, DOI: 10.1016/J.JPOWSOUR.2006.03.057 [extrait le 2006-10-20] cité dans la demande
- WILL J ET AL: "Fabrication of thin electrolytes for second-generation solid oxide fuel cells", SOLID STATE IONICS, NORTH HOLLAND PUB. COMPANY. AMSTERDAM; NL, NL, vol. 131, no. 1-2, 1 juin 2000 (2000-06-01), pages 79-96, XP004222614, ISSN: 0167-2738, DOI: 10.1016/S0167-2738(00)00624-X

## Description

### DOMAINE TECHNIQUE

La présente invention appartient au domaine des nouvelles technologies de l'énergie proposant des dispositifs et procédés pour promouvoir les énergies renouvelables et limiter les émissions de gaz à effet de serre.

Plus particulièrement, la présente invention appartient au domaine des cellules électrochimiques haute température, notamment à électrode support et, en particulier, au domaine des piles à combustibles à oxyde solide (ou SOFC pour « Solid Oxide Fuel Cell », en langue anglaise) et des cellules d'électrolyse à oxyde solide (ou SOEC pour « Solid Oxide Electrolysis Cell », en langue anglaise).

En effet, la présente invention propose un procédé de préparation d'une demi-cellule électrochimique associant une électrode poreuse et un électrolyte dense mince et impliquant une seule étape de frittage à une température inférieure ou égale à 1350°C.

### ÉTAT DE LA TECHNIQUE ANTÉRIEURE

Divers travaux concernent l'élaboration de films d'électrolyte sur électrode massive afin de préparer des cellules électrochimiques de seconde génération à électrode support.

Les méthodes de dépôts rapportées dans la littérature peuvent être divisées en deux grandes familles : les voies dites « physiques » comme la projection thermique ou le dépôt par pulvérisation laser et les voies dites « humides » tels que le coulage en bande, la sérigraphie ou encore le dépôt par électrophorèse. Cependant, seule cette dernière famille intègre des techniques simples, à bas coûts et d'application industrielle. La bibliographie présentée ci-après se concentre donc sur cette deuxième famille.

Différents auteurs rapportent l'élaboration de revêtements d'électrolyte sur anode support par sérigraphie. Une encre constituée de poudre et d'un fluide porteur pouvant contenir des solvants, des dispersants, des liants et/ou des plastifiants est préparée et est ensuite déposée par sérigraphie sur une électrode.

Dans certains cas, les électrodes, mises en forme par pressage ou coulage en bande, sont pré-frittées à température intermédiaire (1000-1200°C), l'ensemble « électrode-électrolyte » étant ensuite fritté à plus haute température (> 1350°C) afin d'obtenir des électrolytes denses de 7 à 20 µm **[1-5].**

Hansch et al. modifient la composition de l'encre en y ajoutant du sol (précurseurs Sol-Gel) **[6].** L'encre est, dans cet article, constituée d'un fluide porteur, de particules de poudre et de précurseurs sol-gel ce qui permet la préparation d'électrolytes denses à base de zircone stabilisée à l'yttrium (ou YSZ pour « Yttrium Stabilized Zirconia ») de 20 µm d'épaisseur après frittage à haute température (1400°C).

Dans le cas d'électrodes mises en forme par coulage en bande, et la réalisation de demi-cellules par sérigraphie d'une suspension comprenant une poudre et un fluide porteur, un seul traitement thermique peut être utilisé dans certains cas. Ainsi, Zhang et al. décrivent la préparation de revêtements de Sm_{0.2}Ce_{0.8}O_{1.9}. (SDC) denses d'environ 15 µm d'épaisseur après frittage à 1400°C sur une anode crue élaborée par coulage en bande **[7].** Il convient de noter que, dans cet article, la température utilisée est une température haute et que l'encre déposée n'est pas un gel mais bien une suspension.

D'autres techniques de dépôt peuvent être mises en oeuvre lors de la préparation de demi-cellules électrochimiques.

Dans le cas du co-coulage en bande, l'anode est préparée par coulage en bande et l'électrolyte est « co-coulé ». La barbotine qui est coulée est constituée de poudre, solvant, dispersant, liant et plastifiant. L'ensemble est ensuite co-fritté à haute température supérieure à 1350°C. En effet, une plus basse température ne permet pas d'obtenir un électrolyte dense. Différents auteurs décrivent l'élaboration d'électrolytes denses de 10 à 30 µm d'épaisseur après traitement thermique à des températures supérieures à 1350°C **[8-10].**

Le procédé de laminage est le même que le co-coulage mais une étape supplémentaire est introduite : le laminage de la bande crue. Ainsi, Song et al. obtiennent un électrolyte de 10 µm après co-frittage à 1350°C **[11].**

Le dépôt par électrophorèse consiste à déposer, sur l'anode pré-frittée, une poudre en suspension par l'application d'un champ électrique. Hosomi et al. élaborent des revêtements denses de YSZ de 3 à 15 µm d'épaisseur suivant le temps et la tension appliquée, après traitement thermique à 1350°C **[12].**

Pour le dépôt par vaporisation (ou « spray-coating » en langue anglaise), une poudre en suspension est déposée, sur l'anode pré-frittée, par pulvérisation ou vaporisation (« spray » en langue anglaise). Divers auteurs ont préparé des électrolytes denses de YSZ de 15 à 45 µm d'épaisseur après frittage à haute température (1400°C) **[13, 14].**

De Souza et al. utilisent le dépôt de suspensions colloïdales **[15].** De la poudre ultra-fine est dispersée dans un solvant puis déposée sur une anode pré-frittée. Des électrolytes denses de YSZ de 9 µm d'épaisseur sont obtenus après frittage à haute température (1400°C).

D'autres auteurs utilisent du sol (Sol-Gel). La barbotine est alors constituée d'un fluide, de particules de poudre et de précurseurs sol-gel. Par dip-coating, Lenormand et al. rapportent la préparation d'électrolytes denses de YSZ de 20 µm après frittage à haute température (1400°C) **[16].**

Des films d'électrolytes minces avec une épaisseur inférieure à 1 ou 2 µm ont déjà été préparés. En effet, des procédés comme la tournette (« spin-coating » en langue anglaise) **[17],** le trempage (« dip-coating » en langue anglaise) ou l'ALD (pour « Atomic Layer Déposition » en langue anglaise) **[18]** permettent l'élaboration de revêtements de quelques centaines de nanomètres (< 2 µm) d'épaisseur d'YSZ dense à plus basses températures (800-1250°C). Les précurseurs en solution sont déposés sur une électrode pré-frittée avant traitement thermique final. Ces techniques nécessitent donc deux traitements thermiques.

Un verrou majeur au développement de cellules électrochimiques haute température notamment à base de zircone stabilisée et ce, dans le concept électrode support (2^{ème} génération) réside dans le coût de fabrication associé aux traitements thermiques de frittage. En effet, la réalisation de cellules cathode//électrolyte//anode nécessite, généralement et comme précédemment exposé, trois traitements thermiques (un par élément) et notamment un traitement de frittage à haute température (≥ 1400°C) afin d'obtenir un électrolyte dense, imperméable aux gaz.

Industriellement, la réalisation à grande échelle de demi-cellules électrode//électrolyte fait intervenir des fours à passage haute température fonctionnant au-delà de 1400°C. Les réfractaires consommables alors utilisés sont des carbures tels que les carbures de silicium qui présentent un coût élevé. En abaissant la température de frittage par exemple à 1200°C, il est possible de remplacer ces réfractaires par des réfractaires à base d'alumine beaucoup moins onéreux. De plus, en réduisant le nombre de traitements thermiques en passant, pour une demi-cellule, de deux traitements à un seul, les coûts et temps de production sont grandement diminués.

Les inventeurs se sont donc fixés pour but de mettre au point un procédé de préparation d'une demi-cellule électrochimique à électrolyte support nécessitant moins d'étapes de frittage et des températures de frittage moins élevées.

### EXPOSÉ DE L'INVENTION

La présente invention permet de résoudre les problèmes techniques tels que précédemment définis et d'atteindre le but que se sont fixés les inventeurs.

En effet, les travaux des inventeurs ont permis de mettre au point un procédé de préparation d'une demi-cellule électrochimique à électrode support comprenant une seule étape de traitement thermique pour co-fritter à la fois l'électrode et l'électrolyte et ce, à une température inférieure à 1350°C et sans frittage préalable de l'électrode. On peut donc parler d'un procédé de mise en forme mono-frittage à basse température d'une demi-cellule électrochimique.

Le procédé de l'invention met en adéquation deux éléments à savoir : une électrode support crue telle qu'un composite support cru et un gel ou un sol précurseur de l'électrolyte. L'absence de pré-frittage du support et l'utilisation d'un gel ou d'un sol très réactif comme précurseur de l'électrolyte permettent de bénéficier d'un seul traitement thermique à plus basse température là où les autres techniques nécessitent souvent un pré-frittage et/ou un traitement à haute température généralement lié à l'utilisation d'une poudre en suspension pour réaliser l'électrolyte. Ainsi, grâce à ce procédé de mise en oeuvre, il est possible de réduire les temps et les coûts de fabrication en vue d'une industrialisation. De plus, la voie sol-gel permet une grande flexibilité, l'obtention de phases de haute pureté et la possibilité d'obtenir des oxydes de formulations complexes (multi-cations) à plus basse température que par des voies de synthèse/de dépôt classiques.

Plus particulièrement, la présente invention concerne un procédé de préparation d'une demi-cellule électrochimique à électrode support comprenant une étape consistant à soumettre une couche d'électrode crue sur laquelle est déposé un gel précurseur de l'électrolyte ou un sol précurseur dudit gel, à un frittage à une température inférieure ou égale à 1350°C, ledit gel comprenant des cations métalliques répartis de façon homogène dans une matrice organique. Pour rappel, une cellule électrochimique correspond à l'association d'au moins deux électrodes et d'au moins un électrolyte et notamment comprend deux électrodes et un électrolyte. Ainsi, une demi-cellule électrochimique correspond à l'association d'au moins une électrode et d'au moins un électrolyte et notamment comprend une électrode et un électrolyte. Les différents éléments constituant la (demi-)cellule électrochimique se présentant sous forme de couches sensiblement parallèles, appliquées les unes sur les autres. Dans le cadre de la présente invention, la demi-cellule électrochimique est avantageusement constituée d'une électrode de type électrode support et d'un électrolyte.

Par « couche d'électrode crue », on entend une couche d'électrode n'ayant subi aucune étape de frittage ou de traitement thermique suite à son dépôt et préalablement au dépôt, à sa surface, du gel précurseur de l'électrolyte ou du sol précurseur dudit gel. Comme précédemment explicité, le seul traitement de frittage subi par la couche d'électrode crue correspond à l'étape de co-frittage à laquelle le gel précurseur de l'électrolyte ou le sol précurseur dudit gel est simultanément soumis.

La couche d'électrode crue mise en oeuvre dans le cadre de la présente invention est obtenue à partir d'une encre céramique, également désignée sous le terme de « barbotine ». Une telle encre céramique est une dispersion (ou suspension) de poudres du matériau d'électrode dans un fluide aqueux ou organique.

Toute poudre d'un matériau d'électrode connue de l'homme du métier est utilisable dans la préparation de l'encre céramique mise en oeuvre dans le cadre de la présente invention. Ainsi, ladite poudre peut être une poudre d'un matériau choisi parmi les matériaux pérovskites de structure ABO₃ avec A représentant une terre rare telle qu'un lanthane et B un métal de transition ; les composés de formule Ln₂NiO_{4+y} avec Ln représentant un lanthanide et, en particulier, La, Nd et Pr ; les germanates de formule La₁₀₋ₓGe₆O_{26+y} ; les silicates de formule La₁₀₋ₓSi₆O_{26+y} ; les zircones stabilisées éventuellement en mélange avec du NiO ; les cérines substituées éventuellement en mélange avec du NiO et leurs mélanges. Plus particulièrement, ladite poudre peut être une poudre d'un matériau choisi parmi les zircones stabilisées éventuellement en mélange avec du NiO ; les cérines substituées éventuellement en mélange avec du NiO et leurs mélanges.

Par « zircone stabilisée », on entend une zircone stabilisée ou substituée par un oxyde métallique et notamment un oxyde d'un métal choisi parmi l'yttrium, le cérium, le scandium, l'ytterbium, l'aluminium et le calcium. Les expressions « zircone stabilisée », « zircone substituée » et « zircone dopée » sont équivalentes et utilisables de façon interchangeable. La zircone stabilisée peut être utilisée en mélange avec du NiO. Dans ce cas, la poudre mise en oeuvre dans l'encre céramique est un mélange de poudre de NiO et de poudre de zircone stabilisée telle que de la poudre de YSZ. On parle d'une électrode du type NiO/zircone stabilisée. Dans un tel mélange, la quantité de zircone stabilisée exprimée en masse par rapport à la masse totale du mélange (NiO + zircone stabilisée) est comprise entre 20 et 60%, notamment 30 et 50% et, en particulier, de l'ordre de 40% (i.e. 40% ± 5%).

Par « cérine substituée », on entend une cérine substituée ou dopée et notamment à base de cérine substituée par un oxyde métallique et notamment un oxyde d'un métal choisi parmi l'yttrium, le gadolinium, le calcium, le samarium, le scandium, l'aluminium, le lanthane et le néodyme. Les expressions « cérine substituée », « cérine stabilisée » et « cérine dopée » sont équivalentes et utilisables de façon interchangeable. La cérine substituée peut être utilisée en mélange avec du NiO. Dans ce cas, la poudre mise en oeuvre dans l'encre céramique est un mélange de poudre de NiO et de poudre de cérine substituée telle que de la poudre de GDC. On parle d'une électrode du type NiO/cérine substituée. Dans un tel mélange, la quantité de cérine substituée exprimée en masse par rapport à la masse totale du mélange (NiO + cérine substituée) est comprise entre 20 et 60%, notamment 30 et 50% et, en particulier, de l'ordre de 40% (i.e. 40% ± 5%).

Quel que soit le matériau d'électrode mis en oeuvre, la poudre dudit matériau est présente en une quantité comprise entre 10 et 90% en poids et notamment entre 20 et 80% en poids par rapport au poids total de l'encre céramique mise en oeuvre.

Toute composition d'encre céramique connue de l'homme du métier est utilisable dans la préparation de l'encre céramique mise en oeuvre dans le cadre de la présente invention. Ainsi, ladite encre céramique comprend au moins un élément choisi parmi un solvant, un dispersant, un liant, un plastifiant et un agent porogène.

Dans le cadre de la présente invention, le solvant/ fluide porteur est le véhicule de la dispersion de poudres du matériau d'électrode. Il peut s'agir d'un solvant organique, d'un mélange de solvants organiques, d'eau ou d'un mélange d'eau et de solvant(s) organique(s). Par « solvant organique », on entend, dans le cadre de la présente invention, un solvant qui appartient à la famille des cétones, des éthers-oxydes, des esters, des alcools, des hydrocarbures notamment aromatiques ou des terpènes. A titre de solvants organiques utilisables dans le cadre de la présente invention, on peut citer la méthyléthylcétone (MEK pour « Methyl Ethyl Ketone » en anglais ou butanone), l'acétone, l'acétate de butyle, l'éthylglycol, l'éthanol, le toluène, le cyclohexanone, l'acétate de butylcarbitol, le terpinéol et leurs mélanges comme un mélange azéotropique de MEK et d'éthanol. Le solvant organique plus particulièrement utilisé, notamment dans le cadre d'un matériau d'électrode du type NiO/zircone stabilisée, est le mélange azéotropique de MEK et d'éthanol. La quantité de solvant dans l'encre céramique est comprise entre 10% et 50% en poids et notamment entre 20% et 40% en poids par rapport au poids total de ladite encre céramique.

Un dispersant peut être utilisé dans la composition d'encre céramique pour améliorer la stabilité de la suspension, pour éviter l'agglomération des poudres contenues dans cette suspension, et, par conséquent, pour obtenir une couche homogène. Tout dispersant connu de l'homme du métier est utilisable dans la composition d'encre céramique mise en oeuvre dans la présente invention. Les dispersants avantageusement utilisables sont choisis parmi l'acide oléique, les phosphate esters, le polyvinyle butyrate, le glycérol trioléate et leurs mélanges. Le dispersant plus particulièrement utilisé, notamment dans le cadre d'un matériau d'électrode du type NiO/zircone stabilisée, est le phosphate esther CP213 commercialisé par Cerampilot. La quantité de dispersant dans l'encre céramique est comprise entre 0,1% et 5% en poids et notamment entre 0,5% et 2% en poids par rapport au poids total de ladite encre céramique.

Dans la composition d'encre céramique, le liant sert à améliorer la cohérence de cette dernière une fois déposée et à en augmenter la densité en créant des ponts organiques entre les particules la constituant. Tout liant connu de l'homme du métier est utilisable dans la composition d'encre céramique mise en oeuvre dans la présente invention. Les liants avantageusement utilisables sont choisis parmi le carbonate de polypropylène, le polyvinyle butyrale (PVB), le polyisobutyle méthacrylate, le poly(chlorure de vinyle-co-acétate de vinyle) (PVCAc), l'éthylcellulose et leurs mélanges. Le liant plus particulièrement utilisé, notamment dans le cadre d'un matériau d'électrode du type NiO/zircone stabilisée, est le polyvinyle butyrale (PVB). La quantité de liant dans l'encre céramique est comprise entre 1% et 20% en poids et notamment entre 2% et 10% en poids par rapport au poids total de ladite encre céramique.

La composition d'encre céramique peut également comprendre un plastifiant dont le rôle consiste à améliorer la flexibilité de cette dernière une fois déposée et donc son étalement sur le substrat. Tout plastifiant connu de l'homme du métier est utilisable dans la composition d'encre céramique mise en oeuvre dans la présente invention. Les plastifiants avantageusement utilisables sont choisis parmi les glycols tels que le polyéthylène glycol (PEG) ; les phtalates tels que le phtalate de butyle et de benzyle (BBP), le phtalate de dibutyle (DBP) et le phtalate de dioctyle (DOP) ; et leurs mélanges. Les plastifiants plus particulièrement utilisés, notamment dans le cadre d'un matériau d'électrode du type NiO/zircone stabilisée, sont le phtalate de dibutyle (DBP) et le polyéthylène glycol (PEG). La quantité de plastifiant dans l'encre céramique est comprise entre 1% et 20% en poids et notamment entre 2% et 10% en poids par rapport au poids total de ladite encre céramique.

Enfin, la composition d'encre céramique peut comprendre un agent porogène, ce dernier participant à la porosité finale de l'électrode préparée selon le procédé de l'invention. En particulier, l'agent porogène permet de créer une porosité ouverte. Par « porosité ouverte », on entend que les pores créés dans le matériau sont communicants et débouchants sur une surface libre. Cet agent porogène est éliminé lors de l'étape de co-frittage du procédé selon l'invention. Avantageusement, l'agent porogène utilisé dans la présente invention se présente sous forme d'une poudre. Cet agent porogène peut être tout agent porogène connu de l'homme du métier. Avantageusement, il s'agit d'un composé naturel ou non, pulvérulent, choisi parmi le noir d'acétylène, le polystyrène, un polyméthacrylate de méthyle (PMMA), l'amidon, un polyéthylène, une cyclodextrine, une cire, un monosaccharide, un oligosaccharide tel que le saccharose, un polysaccharide ou un de leurs mélanges. La quantité d'agent porogène dans l'encre céramique est comprise entre 1% et 10% en poids et notamment entre 2% et 7% en poids par rapport au poids total de ladite encre céramique.

Il convient de remarquer que le mélange organique constituant l'encre céramique peut être ajusté en fonction de la taille de particules et de la surface spécifique des poudres céramiques utilisées.

Lors de la préparation de l'encre céramique mise en oeuvre dans le cadre de l'invention, une fois le mélange des différents éléments la constituant réalisé et homogénéisé, cette dernière peut être soumise à une désaération.

Le précurseur de l'électrolyte mis en oeuvre dans le cadre de la présente invention se présente sous forme d'un gel ou d'un précurseur de celui-ci. Par « précurseur de celui-ci » on entend un précurseur du gel i.e. un sol. Un sol est défini comme une suspension de nature colloïdale ou polymère dans un solvant tandis qu'un gel est défini comme un réseau solide emprisonnant le solvant.

Les éléments métalliques nécessaires à la préparation de l'électrolyte participent, au niveau du sol, à la constitution du réseau colloïdal ou polymère ainsi, leur répartition homogène dans le milieu est assurée lors de la transition sol-gel. Le gel est constitué d'un réseau d'oxyde gonflé par le solvant, avec des liaisons chimiques assurant la cohésion mécanique du matériau en lui donnant un caractère rigide. Dans la plupart des cas, ce sont les liaisons chimiques covalentes qui sont à la base du réseau du gel, mais il arrive que ce réseau repose sur des liaisons chimiques plus faibles, comme des liaisons de coordination ou des liaisons hydrogène.

Toute technique permettant de préparer un sol ou un gel est utilisable dans le cadre de la présente invention. Avantageusement, le gel ou le sol précurseur dudit gel est préparé par voie sol-gel, par voie polymère dérivée du procédé Péchini ou par voie de synthèse dérivée NPG (pour « Nitrate Polyacrylamide Gel » en langue anglaise). En fonction de la voie choisie, les précurseurs moléculaires et notamment les précurseurs métalliques impliqués sont différents. Ces précurseurs moléculaires se caractérisent cependant, tous par une capacité à subir une réaction de polymérisation dans un solvant. De plus, quelle que soit la voie de synthèse mise en oeuvre, les cations métalliques sont répartis de manière homogène dans une matrice organique.

La voie sol-gel met en oeuvre au moins un précurseur organo-métallique et notamment au moins un alcoxyde métallique de formule M(OR)n dans laquelle M désigne un métal et OR un groupement alcoxy avec R une chaîne alkyle, linéaire ou ramifiée, présentant de 1 à 15 atomes de carbone, notamment de 1 à 10 atomes de carbone et, en particulier, de 1 à 5 atomes de carbone. L'objectif de la voie sol-gel est de former soit un polymère inorganique, soit des colloïdes de tailles variables, par hydro-condensation des précurseurs alcoxydes. Le processus d'hydro-condensation de ces précurseurs conduit à la formation d'un gel. Ce gel est constitué d'un réseau M-O-M emprisonnant le solvant, avec des liaisons chimiques assurant la cohésion mécanique du matériau.

Un alcoxyde métallique avantageusement mis en oeuvre dans le cadre de la présente invention est un alcoxyde de formule M(OR)n telle que précédemment définie dans laquelle M représente du zirconium ou du cérium. A titre d'exemples plus particuliers, on peut citer du méthoxyde de zirconium, de l'éthoxyde de zirconium, du n-propoxyde de zirconium, du butoxyde de zirconium, du pentoxyde de zirconium, du méthoxyde de cérium, de l'éthoxyde de cérium, du n-propoxyde de cérium, du butoxyde de cérium et du pentoxyde de cérium. Il est clair que l'électrolyte obtenu à partir de tels précurseurs organo-métalliques est une zircone ou une cérine.

Dans le cas où l'électrolyte à préparer est une zircone substituée ou une cérine substituée telle que précédemment définie, le solvant comprenant au moins un des alcoxydes métalliques tels que précédemment définis comprend en outre un sel d'un métal susceptible de substituer la zircone ou la cérine. Un tel sel est notamment choisi parmi un nitrate, un hydroxyde, un oxalate, un acétate, un carbonate ou un acétylacétonate. Plus particulièrement, dans le cadre d'une zircone substituée, le sel mis en oeuvre est un nitrate et notamment un nitrate d'yttrium.

Le solvant avantageusement employé dans la voie sol-gel est choisi parmi un alcool, tel que le méthanol, l'éthanol ou le n-propanol ; un éther, tel que le diéthyléther et le tétrahydrofurane ; un solvant chloré, tel que le chloroforme, CH₂Cl₂, C₂H₅Cl₂ ; un solvant aprotique comme l'acétone, l'acétylacétone, CH₃CN, la méthyléthylcétone, ou le dioxane ; un solvant protique comme l'acide acétique ou le formamide ; un de leurs mélanges. Un mélange de solvants susceptible d'être utilisé est un mélange de n-propanol et d'acétylacétone.

La voie polymère dérivée du procédé Péchini est basée sur le procédé décrit dans le brevet US 3 330 697 **[19].** Dans cette technique, les précurseurs utilisés sont des précurseurs métalliques du type sels métalliques mis en présence de composés aptes à donner une matrice organique.

Plus particulièrement, dans la voie polymère dérivée du procédé Péchini, le (ou les) sel(s) métallique(s) est(sont) dissous dans une solution organique comprenant au moins un agent polymérisant, au moins un agent complexant et un solvant tel que de l'eau, de l'eau désionisée ou de l'acide acétique. Le (ou les) sel(s) métallique(s) est(sont) notamment choisi(s) parmi un nitrate, un hydroxyde, un oxalate, un acétate, un carbonate ou un acétylacétonate. A titre d'exemple de préparation d'un électrolyte à base de YSZ par la voie polymère dérivée du procédé Péchini, les deux sels mis en oeuvre sont le nitrate d'yttrium et le nitrate de zirconium. L'agent polymérisant est notamment choisi entre l'hexaméthylènetétramine et l'éthylène glycol et l'agent complexant entre l'acétylacétone (notamment lorsque l'agent polymérisant est l'hexaméthylènetétramine) et l'acide citrique (notamment lorsque l'agent polymérisant est l'éthylène glycol) .

La voie de synthèse NPG (pour « Nitrate Polyacrylamide Gel ») est notamment basée sur les travaux décrits dans l'article de Magrez *et al.,* 2002 **[20]** et dans l'article de Chesnaud *et al.,* 2004 **[21].**

Dans cette technique, les précurseurs métalliques se présentant sous forme de sels métalliques sont dissous et mélangés en proportions requises en milieu acide, par exemple en présence d'acide nitrique. Les précurseurs peuvent être des carbonates, des nitrates, des oxydes, des acétates, des oxalates, des acétylacétonates ou encore des hydroxydes. Afin d'éviter toute précipitation, les précurseurs en solution aqueuse sont complexés au moyen par exemple d'acide citrique. L'ajustement du pH par ajout d'une base telle que l'ammoniaque peut également être nécessaire. La solution obtenue, contenant les précurseurs, est maintenue en température ∼200°C sous agitation afin de diminuer son volume. L'ajout d'un monomère tel que l'acide acrylique et d'un réticulant tel que le N-N' Méthylène Bis Acrylamide (MBA) permet la formation du gel. La gélification pouvant être initiée thermiquement ou par ajout d'H₂O₂ ou tout autre composé permettant de créer des radicaux libres.

Dans le cadre du procédé selon la présente invention, la température de frittage ou de co-frittage est avantageusement comprise entre 1000 et 1350°C et notamment entre 1000 et 1300°C.

Préalablement à l'étape de frittage, la couche d'électrode crue sur laquelle est déposé un gel précurseur de l'électrolyte ou un sol précurseur dudit gel se trouve à une température comprise entre 10 et 40°C, notamment entre 18 et 30°C et avantageusement à température ambiante. Par « température ambiante », on entend, dans le cadre de la présente invention, une température de 25 C ± 5°C.

Avant d'être portée à la température de frittage, la couche d'électrode crue sur laquelle est déposé un gel précurseur de l'électrolyte ou un sol précurseur dudit gel est portée à une température intermédiaire comprise entre 400 et 800°C, notamment entre 500 et 700°C et, en particulier, de l'ordre de 600°C (i.e. 600°C ± 50°C). La couche d'électrode crue sur laquelle est déposé un gel précurseur de l'électrolyte ou un sol précurseur dudit gel est maintenue à cette température intermédiaire pendant une durée comprise entre 15 et 120 min, notamment entre 30 et 90 min et, en particulier, de l'ordre de 60 min (i.e. 60 min ± 15 min). La couche d'électrode crue sur laquelle est déposé un gel précurseur de l'électrolyte ou un sol précurseur dudit gel est portée à la température intermédiaire au moyen d'une rampe de montée en température lente comprise entre 10 et 50°C/h, notamment entre 15 et 40°C/h et, en particulier, de l'ordre de 25°C/h (i.e. 25°C/h ± 5°C/h). Cette lente montée en température permet une évacuation lente des éléments organiques ainsi que la cristallisation des éléments précurseurs de l'électrolyte.

La couche d'électrode crue sur laquelle est déposé un gel précurseur de l'électrolyte ou un sol précurseur dudit gel est portée de la température intermédiaire à la température de frittage au moyen d'une rampe de montée en température qui peut être plus rapide et avantageusement comprise entre 25 et 100°C/h, notamment entre 35 et 75°C/h et, en particulier, de l'ordre de 50°C/h (i.e. 50°C/h ± 10°C/h). Puis, la couche d'électrode crue sur laquelle est déposé un gel précurseur de l'électrolyte ou un sol précurseur dudit gel est maintenue à la température de frittage pendant une durée comprise entre 1 et 5 h, notamment entre 2 et 4 h et, en particulier, de l'ordre de 3 h (i.e. 3 h ± 30 min).

Enfin, suite à l'étape de frittage, le matériau obtenu à partir de la couche d'électrode crue sur laquelle est déposé un gel précurseur de l'électrolyte ou un sol précurseur dudit gel est ramenée à une température comprise entre 10 et 40°C, notamment entre 18 et 30°C et avantageusement à température ambiante. La couche est portée de la température de frittage à cette température au moyen d'une rampe de refroidissement comprise entre 40 et 300°C/h, notamment entre 60 et 150°C/h et, en particulier, de l'ordre de 100°C/h (i.e. 100°C/h ± 25°C/h).

L'étape de frittage et les étapes de montée en température et de refroidissement peuvent être mises en oeuvre dans un four programmable tel qu'un four continu à dalles glissantes, un four à rouleaux, un four tunnel à wagonnets, un four statique, un four à chambres ou un four cloche. La taille du four sera choisie pour être adaptée à la taille de la demi-cellule électrochimique à préparer.

L'étape de frittage et les étapes de montée en température et de refroidissement sont avantageusement réalisées sous air.

Plus particulièrement, le procédé selon la présente invention comprend les étapes consistant à :
a) préparer une couche d'électrode crue notamment telle que précédemment définie ;
b) déposer, sur ladite couche d'électrode crue, un gel précurseur de l'électrolyte ou un sol précurseur dudit gel notamment tel que précédemment défini et
c) soumettre ladite couche d'électrode crue sur laquelle est déposé ledit gel précurseur de l'électrolyte ou un sol précurseur dudit gel, à une température de frittage telle que précédemment définie.

Lors de l'étape (a) du procédé selon la présente invention, la couche d'électrode crue est obtenue par dépôt d'une encre céramique telle que précédemment définie. A titre d'exemples particuliers de techniques de dépôt utilisables pour déposer l'encre céramique, on peut citer la sérigraphie, le coulage en bande, l'enduction centrifuge ou le trempage-retrait. Avantageusement, lors de l'étape (a), le dépôt se fait par coulage en bande (« tape casting », en langue anglaise).

La couche d'électrode crue obtenue suite à l'étape (a) du procédé selon l'invention présente avantageusement une épaisseur comprise entre 50 µm et 2 mm et notamment entre 100 µm et 1 mm.

Une fois la couche d'électrode crue déposée, elle peut être séchée. Toute technique de séchage connue de l'homme du métier est utilisable dans le cadre de la présente invention. Ce séchage peut correspondre à un séchage thermique typiquement en soumettant la couche d'électrode crue à une température comprise entre 30 à 180°C, notamment comprise entre 70 à 160°C et, en particulier, à une température de l'ordre de 140°C (i.e. 140°C ± 10°C) et ce, pendant une durée comprise entre 3 et 45 min, notamment comprise entre 5 et 30 min et, en particulier, pendant 15 min. en variante, le séchage peut consister à une simple évaporation des solvants.

De plus, une fois la couche d'électrode crue déposée et éventuellement séchée, elle peut être découpée aux dimensions voulues en tenant compte du retrait au frittage.

A titre d'exemples particuliers de techniques de dépôt utilisables pour déposer le gel précurseur de l'électrolyte ou un sol précurseur dudit gel sur la couche d'électrode crue, on peut citer la sérigraphie, le coulage en bande, l'enduction centrifuge ou le trempage-retrait. Avantageusement, lors de l'étape (b), le dépôt se fait par sérigraphie (« screen printing », en langue anglaise).

La couche correspondant au gel précurseur de l'électrolyte présente une épaisseur comprise entre 1 et 50 µm, notamment entre 2 et 30 µm, en particulier, entre 3 et 20 µm et, tout particulièrement entre 4 et 10 µm.

Suite à l'étape (c) de frittage du procédé selon la présente invention, le matériau fritté obtenu à partir de la couche d'électrode sur laquelle est déposé ledit gel précurseur de l'électrolyte ou un sol précurseur dudit gel peut être soumis à une réduction. Une telle réduction est particulièrement nécessaire lorsque l'électrode est en un matériau comprenant du NiO, tel qu'un matériau de type NiO/zircone stabilisée ou NiO/cérine substituée. En effet, la réduction permet d'obtenir, à partir de tels matériaux, un cermet de type Ni/zircone stabilisée ou Ni/cérine substituée, respectivement. Cette réduction est réalisée en température entre 600 et 1000°C pendant 2 à 10 heures et plus particulièrement à 750°C pendant 3h et ce, sous atmosphère réductrice par exemple sous flux d'AR/H2 (4%).

Une fois le procédé selon la présente invention réalisé, une demi-cellule électrochimique présentant une électrode support poreuse et un électrolyte dense mince est obtenue. La présente invention concerne donc un procédé tel que précédemment défini, dans lequel la demi-cellule électrochimique à électrode support obtenue suite à l'étape de frittage et/ou suite à l'étape de réduction telle que précédemment définie présente une électrode support poreuse et un électrolyte dense mince. En d'autres termes, la présente invention concerne l'utilisation d'un procédé tel que précédemment défini pour préparer une demi-cellule électrochimique à électrode support présentant une électrode support poreuse et un électrolyte dense mince.

Par « électrode poreuse », on entend une électrode à porosité ouverte i.e. une électrode dans laquelle les pores créés sont communicants. Avantageusement, l'électrode poreuse obtenue présente une porosité ouverte comprise entre 20 et 70% en volume et notamment entre 30 et 60% en volume, par rapport au volume total de l'électrode.

Par « électrolyte dense », on entend un électrolyte dont la porosité est inférieure à 10% en volume, notamment inférieure à 7% en volume et, en particulier, inférieure à 6% en volume, par rapport au volume total de l'électrolyte.

Par « électrolyte mince », on entend un électrolyte dont l'épaisseur est comprise entre 1 et 50 µm, notamment entre 2 et 30 µm, en particulier, entre 3 et 20 µm et, tout particulièrement entre 4 et 10 µm.

La présente invention concerne également une demi-cellule électrochimique directement obtenue par la mise en oeuvre du procédé tel que précédemment défini.

D'autres caractéristiques et avantages de la présente invention apparaîtront encore à l'homme du métier à la lecture de l'exemple ci-dessous donné à titre illustratif et non limitatif, en référence aux figures annexées et portant sur la mise en oeuvre d'une demi-cellule SOFC (ou SOEC) de type anode (ou respectivement cathode) support, intégrant une électrode composite NiO/8YSZ et un électrolyte en 8YSZ.

### BRÈVE DESCRIPTION DES DESSINS

La Figure 1 est une micrographie obtenue par microscopie optique d'une bande crue d'électrode telle que mise en oeuvre dans la présente invention.
La Figure 2 présente deux micrographies en mode électrons secondaires de la surface de fracture de la demi-cellule électrochimique (NiO/8YSZ // 8YSZ) traitée thermiquement à 1200°C pendant 3h conformément au procédé de l'invention. Les Figures 2A et 2B sont des micrographies de la même surface de fracture, prises avec deux grossissements différents.

### EXPOSÉ DÉTAILLÉ DE MODES DE RÉALISATION PARTICULIERS

### I. Préparation d'une bande crue de composite NiO/8YSZ.

La réalisation d'une cellule électrochimique à électrode support selon l'invention passe, dans un premier temps, par la réalisation d'une bande crue de composite NiO/8YSZ. Cette dernière est réalisée par coulage en bande d'une barbotine.

Cette suspension est composée d'un mélange pulvérulent de 60% massique de NiO et 40% de 8YSZ à hauteur de 69% de la masse finale de la barbotine, de CP213 à hauteur de 0,6% en masse, d'un mélange de MEK et d'éthanol à hauteur de 23% massique, de PVB à hauteur de 3,4% massique et de PEG à hauteur de 4% massique.

Une fois la bande réalisée et séchée 24h à 20°C, elle est découpée aux formes et dimensions d'électrode requises en tenant compte du retrait au frittage.

### II. Préparation de l'électrolyte 8YSZ.

Dans le cas d'un électrolyte 8YSZ, un sol obtenu à partir d'un système impliquant du n-propoxyde de zirconium, du nitrate d'yttrium, de l'acétylacétone (acac.), du n-propanol et de l'eau a été utilisé. Les paramètres de synthèse retenus pour le sol sont :
- la concentration : C = [Zr] = 0,5 mol.L⁻¹
- le taux de complexation R'
   avec R'= [acac.]/([Zr]+[Y]) = 0,7
- le taux d'hydrolyse W'
   avec W' = [H₂O]/([Zr]+[Y]) = 10.

Le précurseur d'yttrium a été dissous dans le 1-propanol avec une concentration de 1 mol.L⁻¹. Le n-propoxyde de zirconium est introduit dans le mélange 1-propanol/acac sous agitation. L'ajout du nitrate d'yttrium dissous dans le 1-propanol et de l'eau se fait ensuite.

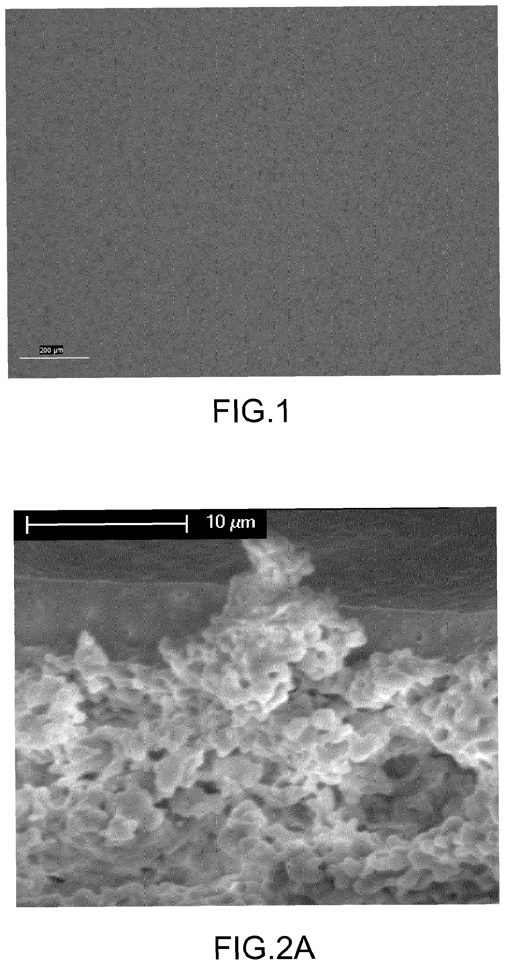

Dans ces conditions de synthèse, le sol est constitué de particules colloïdales créées dès l'amorce des réactions d'hydrolyse et de condensation. Ces particules élémentaires animées d'un mouvement aléatoire s'agrègent lorsqu'elles rentrent en contact. Ce mécanisme se poursuit et conduit à la formation d'objets (agrégats) qui eux-mêmes diffusent et s'agrègent. C'est l'étape de gélification ou transition sol-gel. Lorsque ce processus d'agrégation est fini, le gel est obtenu. C'est ce dernier qui a été déposé à la surface de la bande crue de NiO/8YSZ (Figure 1) au moyen d'une machine de sérigraphie.

Comme le montre la photographie de surface de la bande crue reportée en figure 1, la microstructure imperméable de cette bande (polymère+poudre) permet d'éviter une pénétration du sol ou du gel dans la microstructure finale de l'électrode.

### III. Traitement thermique.

Une fois le dépôt du gel effectué, le système [bande+gel] est traité thermiquement afin de conférer une tenue mécanique suffisante à l'électrode support et afin de densifier l'électrolyte. Le cycle thermique utilisé dans cet exemple est le suivant :

**25°C →** *25°C*/*h* **→ 600°C/1h →** *50°C*/*h* **→ 1200°C/3h →** *100°C*/*h* → **25°C**

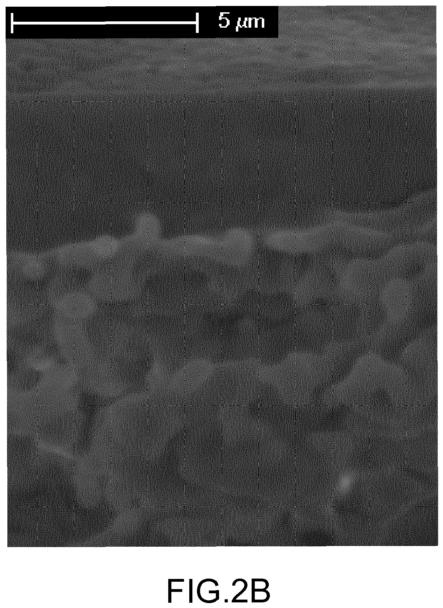

Une observation microstructurale de la surface de fracture du système traité thermiquement a été réalisée par microscopie électronique à balayage. Ces observations sont présentées à la figure 2.

Sur ces micrographies, on distingue en partie haute l'électrolyte dense qui présente une épaisseur de ∼5 µm et en partie basse l'électrode composite NiO/8YSZ qui conduira par réduction *in situ* (c'est-à-dire lors de la mise en service de la cellule) au cermet Ni/8YSZ.

### RÉFÉRENCES

[1] Ried et al., "Processing of YSZ screen printing pastes and the characterization of the electrolyte layers for anode supported SOFC", Journal of the European Ceramic Society 28 (2008) 1801-1808.
**[2]** Sun et al., "NiO+YSZ anode substrate for screen-printing fabrication of YSZ electrolyte film in solid oxide fuel cell", Journal of Physics and Chemistry of Solids 70 (2009) 164-168.
**[3]** Liang et al., "Préparation of NiO-YSZ composite powder by a combustion method and its application for cathode of SOEC", International Journal of Hydrogen Energy 35 (2010) 2852-2857.
**[4]** Dollen et al., "A Study of Screen Printed Yttria-Stabilized Zirconia Layers for Solid Oxide Fuel Cells", Journal of the American Ceramic Society 88 (2005) 3361-3368.
**[5]** Mücke et al., "Cofiring of Thin Zirconia Films During SOFC Manufacturing", Journal of the American Ceramic Society 92 (2009) S95-S102.
**[6]** Hansch et al., "Screen printing of sol-gel-derived electrolytes for solid oxide fuel cell (SOFC) application", Ceramics International 35 (2009) 803-811.
**[7]** Zhang et al., "NiO-YSZ cermets supported low temperature solid oxide fuel cells", Journal of Power Sources 161 (2006) 301-307.
**[8]** Wang et al., "Improvement of anode-supported solid oxide fuel cells", Solid State Ionics 179 (2008) 1593-1596.
**[9]** Doshi et al., "Development of Solid-Oxide Fuel Cells That Operate at 500°C", Journal of The Electrochemical Society 146 (1999) 1273-1278.
**[10]** Ihringer et al., Proc. 5th Int. Conf. Solid Oxide Fuel Cells, Electrochemical Society, Pennington, NJ, (1997) 340.
[11] Song et al., "Fabrication characteristics of an anode-supported thin-film electrolyte fabricated by the tape casting method for IT-SOFC", Journal of Materials Processing Technology 198 (2008) 414-418.
**[12]** Hosomi et al., "Electrophoretic deposition for fabrication of YSZ electrolyte film on non-conducting porous NiO-YSZ composite substrate for intermediate temperature SOFC", Journal of the European Ceramic Society 27 (2007) 173-178.
**[13]** Leng et al., "Performance evaluation of anode-supported solid oxide fuel cells with thin film YSZ electrolyte", International Journal of Hydrogen Energy 29 (2004) 1025-1033.
**[14]** Ding et al., "An anode-supported solid oxide fuel cell with spray-coated yttria-stabilized zirconia (YSZ) electrolyte film", Solid State Ionics 179 (2008) 1246-1249.
**[15]** De Souza et al., "Thin-film solid oxide fuel cell with high performance at low temperature", Solid State Ionics 98 (1997) 57-61.
**[16]** Lenormand et al., "Thick films of YSZ electrolytes by dip-coating process", Journal of the European Ceramic Society 25 (2005) 2643-2646.
**[17]** Mehta et al., "Two-Layer Fuel Cell Electrolyte Structure by Sol-Gel Processing", Journal of Sol-Gel Science and Technology 11 (1998) 203-207.
**[18]** Bernay et al., "Yttria-doped zirconia thin films deposited by atomic layer deposition ALD: a structural, morphological and electrical characterisation", Journal of Physics and Chemistry of Solids 64 (2003) 1761-1770.
**[19]** Brevet US 3 330 697 "Method of preparing lead and alkaline earth titanates and niobates and coating method using the same" au nom de Pechini, publié le 11 juillet 1967.
**[20]** Magrez et al., "A new 'Chimie Douce' approach to the synthesis of Sr1-xLa1+xAl1-xMgxO4 with K2NiF4 structure type", International Symposium on Soft processing N°2 (2002).
[21] Chesnaud et al., "Cuspidine-like compounds Ln4[Ga2(1-x)Ge2xO7+x□1-x]O2 (Ln = La, Nd, Gd; x ≤ 0.4) ", Chemistry of Materials 16 (2004) 5372-5379.

## Revendications

1. Procédé de préparation d'une demi-cellule électrochimique à électrode support comprenant une seule étape de frittage, ladite étape consistant à soumettre une couche d'électrode crue sur laquelle est déposé un gel précurseur de l'électrolyte ou un sol précurseur dudit gel, à un frittage à une température inférieure ou égale à 1350°C, ledit gel comprenant des cations métalliques répartis de façon homogène dans une matrice organique.

2. Procédé selon la revendication 1, **caractérisé en ce que** ladite couche d'électrode crue est obtenue à partir d'une encre céramique correspondant à une dispersion (ou suspension) de poudres du matériau d'électrode dans un solvant aqueux ou organique.

3. Procédé selon la revendication 2, **caractérisé en ce que** ladite poudre est une poudre d'un matériau choisi parmi les matériaux pérovskites de structure ABO₃ avec A représentant une terre rare telle qu'un lanthane et B un métal de transition ; les composés de formule Ln₂NiO_{4+y} avec Ln représentant un lanthanide ; les germanates de formule La₁₀₋ₓGe₆O_{26+y} ; les silicates de formule La₁₀₋ₓSi₆O_{26+y} ; les zircones stabilisées éventuellement en mélange avec du NiO ; les cérines substituées éventuellement en mélange avec du NiO et leurs mélanges.

4. Procédé selon la revendication 2 ou 3, **caractérisé en ce que** ladite encre céramique comprend au moins un élément choisi parmi un solvant, un dispersant, un liant, un plastifiant et un agent porogène.

5. Procédé selon l'une quelconque des revendications précédentes, **caractérisé en ce que** le gel précurseur de l'électrolyte ou le sol précurseur dudit gel est préparé par voie sol-gel, par voie polymère dérivée du procédé Péchini ou par voie de synthèse NPG (pour « Nitrate Polyacrylamide Gel »).

6. Procédé selon la revendication 5, **caractérisé en ce que** ladite voie sol-gel met en oeuvre au moins un précurseur organo-métallique et notamment au moins un alcoxyde métallique de formule M(OR)n dans laquelle M désigne un métal et OR un groupement alcoxy avec R une chaîne alkyle, linéaire ou ramifiée, présentant de 1 à 15 atomes de carbone, notamment de 1 à 10 atomes de carbone et, en particulier, de 1 à 5 atomes de carbone.

7. Procédé selon l'une quelconque des revendications précédentes, **caractérisé en ce que** la température de frittage est comprise entre 1000 et 1350°C et notamment entre 1000 et 1300°C et **en ce que** la couche d'électrode crue sur laquelle est déposé un gel précurseur de l'électrolyte ou un sol précurseur dudit gel est maintenue à la température de frittage pendant une durée comprise entre 1 et 5 h, notamment entre 2 et 4 h et, en particulier, de l'ordre de 3 h.

8. Procédé selon l'une quelconque des revendications précédentes, **caractérisé en ce que**, avant d'être portée à la température de frittage, la couche d'électrode crue sur laquelle est déposé un gel précurseur de l'électrolyte ou un sol précurseur dudit gel est portée à une température intermédiaire comprise entre 400 et 800°C, notamment entre 500 et 700°C et, en particulier, de l'ordre de 600°C et **en ce qu'**elle est maintenue à cette température intermédiaire pendant une durée comprise entre 15 et 120 min, notamment entre 30 et 90 min et, en particulier, de l'ordre de 60 min.

9. Procédé selon la revendication 8, **caractérisé en ce que** ladite couche d'électrode crue sur laquelle est déposé un gel précurseur de l'électrolyte ou un sol précurseur dudit gel est portée à la température intermédiaire au moyen d'une rampe de montée en température lente comprise entre 10 et 50°C/h, notamment entre 15 et 40°C/h et, en particulier, de l'ordre de 25°C/h.

10. Procédé selon la revendication 8 ou 9, **caractérisé en ce que** ladite couche d'électrode crue sur laquelle est déposé un gel précurseur de l'électrolyte ou un sol précurseur dudit gel est portée de la température intermédiaire à la température de frittage au moyen d'une rampe de montée en température comprise entre 25 et 100°C/h, notamment entre 35 et 75°C/h et, en particulier, de l'ordre de 50°C/h.

11. Procédé selon l'une quelconque des revendications précédentes, **caractérisé en ce qu'**il comprend les étapes consistant à :
a) préparer une couche d'électrode crue ;
b) déposer, sur ladite couche d'électrode crue, un gel précurseur de l'électrolyte ou un sol précurseur dudit gel et
c) soumettre ladite couche d'électrode crue sur laquelle est déposé ledit gel précurseur de l'électrolyte ou un sol précurseur dudit gel, à une température de frittage telle que définie à la revendication 1 ou 7.

12. Procédé selon la revendication 11, **caractérisé en ce que**, lors de ladite étape (a), la couche d'électrode crue est obtenue par dépôt d'une encre céramique telle que définie à l'une quelconque des revendications 2 à 4 par coulage en bande (« tape casting », en langue anglaise).

13. Procédé selon la revendication 11 ou 12, **caractérisé en ce que**, lors de ladite étape (b), le dépôt se fait par sérigraphie (« screen printing », en langue anglaise).

14. Procédé selon l'une quelconque des revendications 11 à 13, **caractérisé en ce que**, suite à ladite étape (c), le matériau fritté obtenu à partir de la couche d'électrode crue sur laquelle est déposé ledit gel précurseur de l'électrolyte ou un sol précurseur dudit gel est soumis à une réduction réalisée à une température comprise entre 600 et 1000°C pendant 2 à 10 heures sous atmosphère réductrice.

15. Utilisation d'un procédé selon l'une quelconque des revendications précédentes pour préparer une demi-cellule électrochimique à électrode support présentant une électrode support poreuse et un électrolyte dense dont l'épaisseur est comprise entre 1 et 50 *µ*m.

## Patentansprüche

1. Verfahren zur Herstellung einer elektrochemischen Halbzelle mit Tragelektrode, umfassend einen einzigen Sinterungsschritt, wobei der Schritt darin besteht, eine Rohelektrodenschicht, auf der ein Präkursorgel des Elektrolyten oder ein Präkursorsol des Gels aufgebracht ist, einer Sinterung bei einer Temperatur kleiner oder gleich 1350°C zu unterziehen, wobei das Gel metallische Kationen umfasst, die auf homogene Weise in einer organischen Matrix verteilt sind.

2. Verfahren nach Anspruch 1, **dadurch gekennzeichnet, dass** die Rohelektrodenschicht erhalten wird ausgehend von einer keramischen Tinte entsprechend einer Dispersion (oder Suspension) von Pulvern des Elektrodenmaterials in einem wässrigen oder organischen Lösungsmittel.

3. Verfahren nach Anspruch 2, **dadurch gekennzeichnet, dass** das Pulver ein Pulver aus einem Material ist, welches ausgewählt ist aus den Perovskitmaterialien der Struktur ABO₃, wobei A eine seltene Erde wie zum Beispiel ein Lanthan repräsentiert und B ein Übergangsmetall ist; den Verbindungen der Formel Ln₂NiO_{4+y}, wobei Ln ein Lanthanid repräsentiert; den Germanaten der Formel La₁₀₋ₓGe₆O_{26+y}; den Silikaten der Formel La₁₀₋ₓSi₆O_{26+y}; den stabilisierten Zirkonen, gegebenenfalls in Mischung mit NiO; den substituierten Cerinen, gegebenenfalls in Mischung mit NiO, und ihren Mischungen.

4. Verfahren nach Anspruch 2 oder 3, **dadurch gekennzeichnet, dass** die keramische Tinte wenigstens ein Element umfasst, dass ausgewählt ist aus einem Lösungsmittel, einem Dispersionsmittel, einem Binder, einem Weichmacher und einem porogenen Agens.

5. Verfahren nach einem der vorhergehenden Ansprüche, **dadurch gekennzeichnet, dass** das Präkursorgel des Elektrolyten oder das Präkursorsol des Gels auf dem Sol-Gel-Weg hergestellt wird, auf dem Polymer-Weg abgeleitet aus dem Pechini-Verfahren, oder auf dem NPG-Syntheseweg (für "Nitrat-Polyacrylamid-Gel").

6. Verfahren nach Anspruch 5, **dadurch gekennzeichnet, dass** der Sol-Gel-Weg wenigstens einen organometallischen Präkursor verwendet, und insbesondere ein metallisches Alkoxyd der Formel M(OR)n, wobei M ein Metall bezeichnet, und OR eine Alkoxygruppe, wobei R eine lineare oder verzweigte Alkylkette mit 1 bis 15 Kohlenstoffatomen ist, insbesondere 1 bis 10 Kohlenstoffatomen, und speziell 1 bis 5 Kohlenstoffatomen.

7. Verfahren nach einem der vorhergehenden Ansprüche, **dadurch gekennzeichnet, dass** die Sinterungstemperatur zwischen 1000 und 1350°C enthalten ist, und insbesondere zwischen 1000 und 1300°C, und dass die Rohelektrodenschicht, auf der ein Präkursorgel des Elektrolyten oder ein Präkursorsol des Gels aufgebracht ist, während einer Dauer bei der Sinterungstemperatur gehalten wird, die zwischen 1 und 5 h enthalten ist, insbesondere zwischen 2 und 4 h, und speziell in der Größenordnung von 3 h.

8. Verfahren nach einem der vorhergehenden Ansprüche, **dadurch gekennzeichnet, dass** die Rohelektrodenschicht, auf der ein Präkursorgel des Elektrolyten oder ein Präkursorsol des Gels aufgebracht ist, bevor sie auf die Sinterungstemperatur gebracht wird, auf eine Zwischentemperatur gebracht wird, die zwischen 400 und 800°C enthalten ist, insbesondere zwischen 500 und 700°C, und speziell in der Größenordnung von 600°C, und dass sie bei dieser Zwischentemperatur während einer Dauer gehalten wird, die zwischen 15 und 120 min enthalten ist, insbesondere zwischen 30 und 90 min, und speziell in der Größenordnung von 60 min.

9. Verfahren nach Anspruch 8, **dadurch gekennzeichnet, dass** die Rohelektrodenschicht, auf der ein Präkursorgel des Elektrolyten oder ein Präkursorsol des Gels aufgebracht ist, auf die Zwischentemperatur mit Hilfe einer langsamen Temperaturanstiegsrampe gebracht wird, die zwischen 10 und 50°C/h enthalten ist, insbesondere zwischen 15 und 40°C/h, und speziell in der Größenordnung von 25°C/h.

10. Verfahren nach Anspruch 8 oder 9, **dadurch gekennzeichnet, dass** die Rohelektrodenschicht, auf der ein Präkursorgel des Elektrolyten oder ein Präkursorsol des Gels aufgebracht ist, von der Zwischentemperatur auf die Sinterungstemperatur mit Hilfe einer Temperaturanstiegsrampe gebracht wird, die zwischen 25 und 100°C/h enthalten ist, insbesondere zwischen 35 und 75°C/h, und speziell in der Größenordnung von 50°C/h.

11. Verfahren nach einem der vorhergehenden Ansprüche, **dadurch gekennzeichnet, dass** es die folgenden Schritte umfasst:
a) Herstellen einer Rohelektrodenschicht;
b) Aufbringen eines Präkursorgels des Elektrolyten oder eines Präkursorsols des Gels auf die Rohelektrodenschicht, und
c) Aussetzen der Rohelektrodenschicht, auf der das Präkursorgel des Elektrolyten oder ein Präkursorsol des Gels aufgebracht ist, an eine Sinterungstemperatur wie in Anspruch 1 oder 7 definiert.

12. Verfahren nach Anspruch 11, **dadurch gekennzeichnet, dass** während des Schritts a) die Rohelektrodenschicht erhalten wird durch Aufbringen einer keramischen Tinte wie in einem der Ansprüche 2 bis 4 definiert mittels Foliengießen (auf Englisch "tape casting").

13. Verfahren nach Anspruch 11 oder 12, **dadurch gekennzeichnet, dass** während des Schritts b) die Aufbringung durch Siebdruck erfolgt (auf Englisch "screen printing").

14. Verfahren nach einem der Ansprüche 11 bis 13, **dadurch gekennzeichnet, dass** im Anschluss an den Schritt c) das gesinterte Material, welches erhalten ist ausgehend von der Rohelektrodenschicht, auf der das Präkursorgel des Elektrolyten oder ein Präkursorsol des Gels aufgebracht ist, einer Reduktion unterzogen wird, die bei einer Temperatur durchgeführt wird, die zwischen 600 und 1000°C enthalten ist, während 2 bis 10 Stunden und unter Reduktionsatmosphäre.

15. Verwendung eines Verfahrens nach einem der vorhergehenden Ansprüche zur Herstellung einer elektrochemischen Halbzelle mit Tragelektrode, die eine poröse Tragelektrode und einen dichten Elektrolyten aufweist, dessen Dicke zwischen 1 und 50µm enthalten ist.

## Claims

1. A method for preparing an electrode-supported electrochemical half-cell including a single step of sintering, said step consisting in subjecting a green electrode layer on which a precursor gel of the electrolyte or a precursor sol of said gel is deposited to sintering at a temperature of less than or equal to 1350°C, said gel comprising metallic cations uniformly dispersed in an organic matrix.

2. A method according to claim 1, **characterised in that** said green electrode layer is obtained from a ceramic ink corresponding to a dispersion (or suspension) of powders of the electrode material in an aqueous or organic solvent.

3. A method according to claim 2, **characterised in that** said powder is a powder of a material chosen from among the perovskite materials of structure ABO₃, where A represents a rare earth such as a lanthanum and B a transition metal; compounds of formula Ln₂NiO_{4+y}, where Ln represents a lanthanide; germanates of formula La₁₀₋ₓGe₆O_{26+y}; silicates of formula La₁₀₋ₓSi₆O_{26+y}; stabilised zirconias, possibly blended with NiO; substituted cerias, possibly blended with NiO, and blends thereof.

4. A method according to claim 2 or 3, **characterised in that** said ceramic ink includes at least one element chosen from among a solvent, a dispersing agent, a binder, a plasticiser and a pore-forming agent.

5. A method according to any one of the previous claims, **characterised in that** the precursor gel of the electrolyte or the precursor sol of said gel is prepared by a sol-gel process, by a polymer process derived from the Péchini method, or by an NPG (nitrate polyacrylamide gel) synthesis process.

6. A method according to claim 5, **characterised in that** said sol-gel process uses at least one organometallic precursor and notably at least one metallic alcoxide of formula M(OR)n, in which M designates a metal and OR an alcoxy group, where R is an alkyl chain, whether linear or branched, having 1 to 15 carbon atoms, and notably 1 to 10 carbon atoms and, in particular, 1 to 5 carbon atoms.

7. A method according to any one of the previous claims, **characterised in that** the sintering temperature is between 1000 and 1350°C and notably between 1000 and 1300°C, and **in that** the green electrode layer on which a precursor gel of the electrolyte or a precursor sol of said gel is deposited is maintained at the sintering temperature for a period of between 1 and 5 h, notably between 2 and 4 h and, in particular, of the order of 3 h.

8. A method according to any one of the previous claims, **characterised in that**, before being brought to the sintering temperature, the green electrode layer on which a precursor gel of the electrolyte or a precursor sol of said gel is brought to an intermediate temperature of between 400 and 800°C, notably between 500 and 700°C and, in particular, of the order of 600°C and **in that** it is maintained at this intermediate temperature for a period of between 15 and 120 min, notably between 30 and 90 min and, in particular, of the order of 60 min.

9. A method according to claim 8, **characterised in that** said green electrode layer on which a precursor gel of the electrolyte or a precursor sol of said gel is deposited is brought to an intermediate temperature by means of a slow rising temperature gradient of between 10 and 50°C/h, notably between 15 and 40°C/h and, in particular, of the order of 25°C/h.

10. A method according to claim 8 or 9, **characterised in that** said green electrode layer on which a precursor gel of the electrolyte or a precursor sol of said gel is deposited is brought from the intermediate temperature to the sintering temperature by means of a rising temperature gradient of between 25 and 100°C/h, notably between 35 and 75°C/h and, in particular, of the order of 50°C/h.

11. A method according to any one of the previous claims, **characterised in that** it includes the steps consisting in:
a) preparing a green electrode layer;
b) depositing, on said green electrode layer, a precursor gel of the electrolyte or a precursor sol of said gel and
c) subjecting said green electrode layer on which said precursor gel of the electrolyte or a precursor sol of said gel is deposited to a sintering temperature as defined in claim 1 or 7.

12. A method according to claim 11, **characterised in that**, in step (a), the green electrode layer is obtained by deposition of a ceramic ink as defined in any one of claims 2 to 5 by tape casting.

13. A method according to claim 11 or 12, **characterised in that**, in step (b), the deposition is accomplished by screen printing.

14. A method according to any one of claims 11 to 13, **characterised in that**, following step (c), the sintered material obtained from the green electrode layer on which said precursor gel of the electrolyte or a precursor sol of said gel is deposited is subjected to a reduction performed at a temperature between 600 and 1000°C for 2 to 10 hours in a reducing atmosphere.

15. Use of a method according to any one of the previous claims, to prepare an electrode-supported electrochemical half-cell having a porous support electrode and a dense electrolyte, the thickness of which is between 1 and 50 µm.
